# EUROPEAN PATENT APPLICATION

(11) **EP 4 289 737 A1**
(43) Date of publication of application: **13.12.2023**
(21) Application number: 23177938.0
(22) Date of filing: 07.06.2023
(51) Int. Cl.: B64D 11/00, B64D 13/06, B64D 13/00, F25B 21/04, B64D 11/04, F24F 3/06

(54) **HIGH EFFICIENCY MICRO-CHILLER UNIT**

(30) Priority: 08.06.2022 US 202263350352 P; 24.01.2023 US 202318100840
(71) Applicant: B/E Aerospace, Inc., Winston-Salem, NC 27105 (US)
(72) Inventor: PEARSON, Matthew R., East Hartford, 06118 (US); ST. ROCK, Brian, Andover, 06232 (US); STEADMAN, Samuel, Coventry, CV4 9UJ (GB)
(74) Representative: Dehns

(57) **Abstract**

A micro-chiller assembly, apparatus and method of manufacture is provided. The micro-chiller assembly includes an exterior housing (300), an interior compartment with a plurality of sides within the exterior housing; a micro-chiller unit (320), and a ringed duct (350) with an irregular topology; wherein the micro-chiller unit (320) is mounted to a side of the interior compartment, wherein the ringed duct (350) with the irregular topology is coupled on one end to the micro-chiller unit (320) and coupled on another end to an exterior vent (370) configured in the exterior housing (300) to draw in outside air for channeling to the micro-chiller unit (320) via the irregular topology enabling uniform distribution of airflow for cooling of the interior compartment by the micro-chiller unit (320).

## Description

### CROSS-REFERENCE TO RELATED APPLICATIONS

This application claims benefit of priority U.S. Provisional Application Ser. No. 63/350,352 entitled "HIGH EFFICIENCY MICRO-CHILLER UNIT," filed on June 8, 2022.

### FIELD

The present disclosure generally relates to cooling compartments within an aircraft, and more specifically to systems, apparatuses, and methods for operating a cooling system configured for compartments within, for example, a galley, cart, or in-seat compartment onboard an aircraft.

### BACKGROUND

Premium class passengers that include first class and business are generally considered the most profitable passenger segment for carriers, and therefore carriers' desire to provide the premium class passengers with the high comfort and service. This includes extending the class of service to not only commonly considered options such as passenger seating and space, but also to other services provided including providing chilled refreshments in a mini bar in the aircraft galley or in an in-seat passenger seat compartment. It has not been feasible to station compact refrigerator-type compartments in an aircraft mini-bar, galley monument, seat station or other such smaller enclosures or units in the aircraft interior.

### SUMMARY

In various embodiments, a micro-chiller assembly for an enclosure with a controlled environmental in an aircraft is provided. The micro-chiller assembly includes a housing; an interior compartment with a plurality of sides within the housing; a micro-chiller unit; and a ringed duct with an irregular topology; wherein the micro-chiller unit is mounted to a side of the interior compartment; wherein the ringed duct with the irregular topology is coupled on one end to the micro-chiller unit and coupled on another end to an exterior vent configured in the housing to draw in outside air for channeling to the micro-chiller unit via the ringed duct with irregular topology enabling uniform distribution of airflow.

In various embodiments, the micro-chiller unit further comprises: a radially configured heat sink that receives the outside air and radially repels hotter air from the interior compartment to one or more exterior vents configured with the housing.

In various embodiments, the micro-chiller unit further comprises: a set of thermo-electric elements is configured to apply conductive cooling to the side of the interior compartment on which the micro-chiller unit is mounted.

In various embodiments, the micro-chiller unit further comprises: a set of blocks on which the set of thermo-electric elements are mounted and are attached to a plate composed of a conductive material that forms the side of the interior compartment wherein the set of thermo-electric elements configured apply conductive cooling to the plate that cools the interior compartment.

In various embodiments, the interior compartment further comprises an insulative layer formed around one or more sides to thermally insulate the interior compartment from heat seepage through one or more walls of the housing.

In various embodiments, the plate is configured to wrap around more than one side of the interior compartment to enable thermal conductive cooling to one or more sides of a plurality of sides of the interior compartment.

In various embodiments, the ringed duct further comprises a pair of channels that distributes the outside air uniformly across a set of fins arranged within a radially configured heatsink to enable uniform conductive cooling of the plate on at least one side of the interior compartment.

In various embodiments, the set of blocks provides a protective layer between the plate and the set of thermo-electric elements for stresses caused by conductive cooling of the plate.

In various embodiments, the ringed duct is configured to evenly distribute air flow across the heatsink.

In various embodiments, the micro-chiller assembly further comprises a power supply coupled to the micro-chiller unit configured to apply a polarity in a forward direction to cool the interior compartment, and to apply the polarity in a reverse direction to heat the interior compartment.

In various embodiments, the plate is configured in a range of 1 to 2 millimeters in thickness.

In various embodiments, an apparatus for managing air flow within a housing is provided. The apparatus includes an exterior housing; a micro-chiller unit; an interior compartment; and a radially configured heatsink; wherein the micro-chiller unit is attached to a side of the interior compartment within the exterior housing to cause a conductive cooling effect to the side of the interior compartment to cool a space within the interior compartment; wherein the side of the interior compartment is formed with a conductive material to receive a conductive cooling affect from the micro-chiller unit by transfer of heat via the radially configured heatsink of the micro-chiller unit; and wherein the radially configured heatsink receives outside air from an irregular shaped duct that channels the outside air to the radially configured heatsink.

In various embodiments, the irregular shaped duct is a ringed duct configured with a topology for fluidic airflow for distribution across a set of fins of the radially configured heatsink.

In various embodiments, the side of the interior compartment comprises aluminum.

In various embodiments, the side of the interior compartment is covered with a facially cosmetic sheet.

In various embodiments, one or more sides of the interior compartment is configured with an insulative barrier to reduce heat seepage into the interior compartment.

In various embodiments, the exterior housing is at least one of a cart or a galley compartment of an aircraft.

In yet further embodiments, a method to manufacture of a cooling apparatus is provided. The method includes configuring an exterior housing with an interior compartment with a plurality of sides; configuring a micro-chiller unit of a set of components that comprises at least a heatsink and a set of thermo-electric elements; and configuring a ringed duct attached to the micro-chiller unit wherein the ringed duct is configured in an irregular shape to enable a uniform distribution of outside air across the heatsink to expel warmer air within the exterior housing, and for conductive cooling of the interior compartment by the set of thermo-electric elements of the micro-chiller unit.

In various embodiments, the method includes configuring a set of aluminum blocks for mounting the heatsink and for conductive cooling of the interior compartment.

In various embodiments, the method includes configuring the exterior housing to fit within a monument of a galley of an aircraft.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a diagram of an example micro-chiller compartment system configured to fit in an enclosure in an aircraft galley or bar, in accordance with various embodiments.
FIG. 2. illustrates a diagram of another embodiment of the micro-chiller unit configured as a standalone galley sub-unit as described in FIG. 1, in accordance with various embodiments.
FIG. 3 illustrates a diagram of an assembly of the micro-chiller unit and ingress and egress airflow in an exterior housing under various embodiments.
FIG. 4 illustrates a diagram of components of the micro-chiller unit under various embodiments.
FIGS. 5A, 5B and 5C illustrate diagrams of components of the micro-chiller unit of FIGS 1-4 under various embodiments.
FIG. 6 illustrates a diagram of a micro-chiller unit and the air intake duct assembly, under various embodiments.
FIG. 7 illustrates a flow diagram for configuring an assembly of the micro-chiller unit in an exterior housing of the aircraft under various embodiments.

### DETAILED DESCRIPTION

The following detailed description of various embodiments herein refers to the drawings, which show various embodiments by way of illustration. While these various embodiments are described in sufficient detail to enable those skilled in the art to practice the disclosure, it should be understood that other embodiments may be realized and that changes may be made without departing from the disclosure. Thus, the detailed description herein is presented for illustration only and not of limitation. Any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed may be combined.

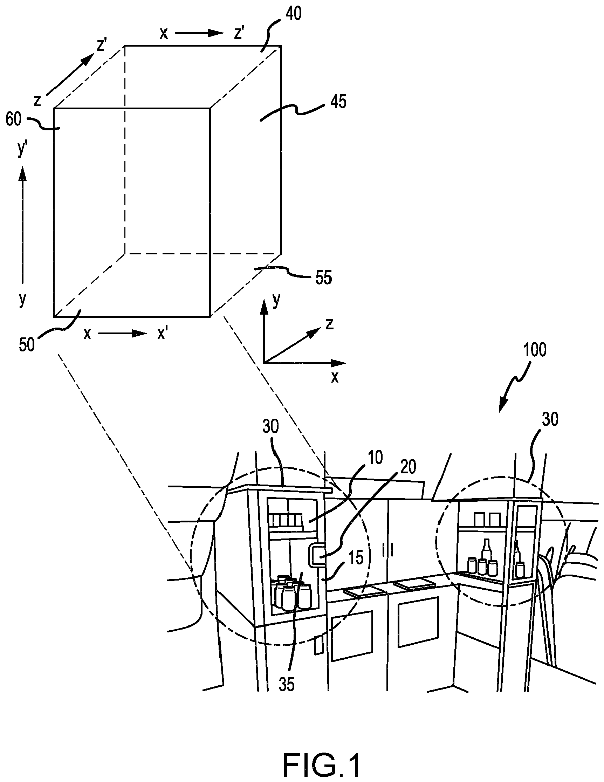

With reference to FIG.1, FIG. 1 illustrates a diagram of a micro-chiller compartment system 100 that is configured to fit in an exterior housing 30 in an aircraft galley or bar, in accordance with various embodiments. The micro-chiller compartment system 100 is configured to seamlessly integrate into other various compartments in the aircraft galley or other parts of the aircraft to provide a facility to store and cool items such as refreshments, snacks, condiments, medical supplies that are desired to be refrigerated. In various embodiments, the micro-chiller compartment system 100 can be configured in one or more sub-units integrated into a larger galley unit. The larger galley unit includes a plurality of sub-units constructed as integral parts of the larger galley unit, or built-up from a selection of modules. As an example, the micro-chiller unit 10 configured within a micro-chiller compartment system 100 in a sub-unit and can provide refrigeration as a cooling system for storing chilled foods at a predetermined temperature in the sub-unit or can provide (with a reversal of polarities) heating and reheating of packaged meals in the sub-unit. In various embodiments, the micro-chiller unit 10 may be configured in sub-units having wheeled carts stowed beneath and include casters used in meal preparation and for rolling down aisles for serving passengers in an aircraft.

In various embodiments, the micro-chiller compartment system 100 is configured with legacy power systems available in parts of the aircraft that include low voltage DC power supplies and AC power supplies that are available. The micro-chiller compartment system 100, as an example, has an internal AC/DC converter, or a DC/DC regulator to receive power from a 120 volts (60 hertz) AC current or a 12/24 volts DC current from a battery that includes a micro-chiller unit 10 having a door 15 with a latch 20 that clamps the door 15 to the exterior housing 30, and a vent to draw in exterior cabin air. In various embodiments, the micro-chiller unit 10 includes a container (e.g., aluminum chill-pan) 35 comprising a conductive material like aluminum generally composed of five sides (e.g., a top side 40 (Y'-Z', Y'-X'), a bottom side 50 (Y-Z', X-X'), a left side 60 (Y-Y', Z-Z'), a right side 55 (X'-Z', Y-Y'), a back side 45 (Z'-X', Y'-Z') with an enclosed space that makes up the interior of the micro-chiller unit 10.

In various embodiments, the internal volume of the enclosed space is configured in dimensions of approximately or in a range as desired of 8 inches (20.3 cm) in height, 9 inches (22.86 cm) in width and 3 (7.62 cm) inches depth. In various embodiments, the interior space of the micro-chiller unit 10 can store about 3 12-fluid-ounces (355-millimeter) cans of beverages (ex., a standard beverage can is about 2.6 inches (6.6 cm) in diameter and 4.83 inches (12.3 cm) in height). It is contemplated that the micro-chiller unit 10 can be configured in a variety of sizes and shapes configured to fit within particular aircraft in-seat compartments, galley carts, and other aircraft monuments.

In various embodiments, the door 15 of the micro-chiller unit 10 is made of a combination of insulative material with a see-through insulated double-glazed polycarbonate insert that enables a convenient viewing of products stored in the interior cavity of the unit without requiring opening of the latch 20 and door 15 to expose its interior contents.

In various embodiments, the micro-chiller unit 10 is an igloo style micro-chiller unit that can comprise of a set of thermo-electric elements (e.g., Peltier elements) with a heat sink mounted on a radially concentric set of fins for heat dissipation with a blower mounted onto the top of the compartment. In implementation, the top wall of the compartment is encapsulated by an aluminum plate of approximately 1-2 mm thick. The micro-chiller unit 10 in operation enables a cooling of the aluminum plate (via one or more Peltier modules), which cools the interior compartment. In various embodiments, at least one side of the unit (excluding the door that incorporates a glass or other non-opaque material) are lined with insulation and may also include an optional cosmetic face sheet (e.g., stainless steel fascia) for aesthetics and protection. To provide increased cooling and power performance, the aluminum sheet may be extended and folded down over additional sides of the compartment and if a cosmetic face sheet is used, the cosmetic face sheet is bonded or riveted or otherwise coupled to the aluminum with, for example, an adhesive such as a thermal epoxy. The aluminum plate forms a barrier that prevents or at least lessens (intercepts) the heat entering the cooling compartment (chamber, interior housing, interior cavity) before it mixes with the internally distributed air flow or is expelled to the exterior by the channeled distributed air.

In various embodiments, the assembly of the micro-chiller unit 10 with multiple layers, a distributed channel of cooled air across each side, provides a compact, low-noise, modular, extensible architecture for chilling small spaces within a galley, cart, or in-seat monument. In various embodiments, the micro-chiller unit 10 is a solid-state unit configured with no moving parts (common in a refrigeration unit) on either the beverage, food, or user (passenger) facing side of the system because the chilling operation is performed by cooling of the aluminum plate. In various embodiments, the only moving part of the assembly that makes up the micro-chiller unit 10 is a fan, which is placed behind the monument (container) structure and is out of view, and not accessible by the user.

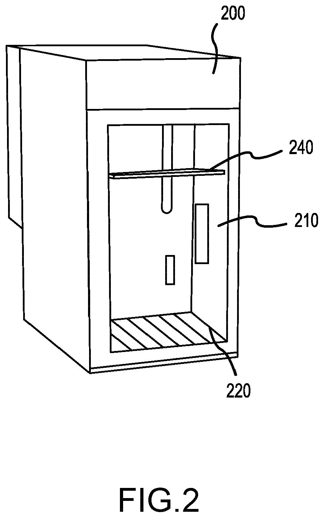

With reference to FIG 2, FIG. 2. illustrates a diagram of another embodiment of the micro-chiller unit 200 configured as a standalone galley sub-unit as described in FIG. 1. While the micro-chiller unit 200 is depicted as a standalone galley sub-unit, it is contemplated that are variety of different size configured sub-units like the exemplary micro-chiller unit 200 can be put together as desired to accommodate different enclosures or compartments within an aircraft galleyand configured in movable carts (beverage carts) that can be found in the aircraft galley for serving passengers up and down the aisles of the aircraft. The micro-chiller unit 200 can be configured in different heights and widths for traversing the aisle corridor in the aircraft that has limited width available dependent on the seat configurations and other monuments in the aircraft interior.

In various embodiments, the micro-chiller unit 200 is an eco-friendly chilling unit (reducing the emission of ozone-depleting refrigerants into the atmosphere) that is a self-contained unit (i.e., the micro-chiller unit 200) that can be configured with a side door (or a front door) 210, a side window (or a front window) 220, and various dividers 240. In various embodiments, the side door 210 allows placement against a wall in the aircraft galley with accessibility through one side via the side door 210, while the other is a closed side positioned against the wall of the aircraft galley. The micro-chiller unit 200 can be configured to be easily insertable and swappable with an enclosure, sub-unit or insert housing in the aircraft galley to enable convenient repair and replacement of the unit that can result in saving maintenance time and aircraft operational downtime.

In various embodiments, the micro-chiller unit 200 is suitable for use in a stand-alone beverage station and various plug and play units that make up the aircraft galley. In various embodiments, the micro-chiller unit 200 enables a functionality that allows for flexibility and ergonomics that can be beneficial in galley configurations that include food-preparation stations and multiple beverage carts, self-serve coolers, and other modular units in compact space saving enclosures. In various embodiments, the micro-chiller unit 200 can be configured with a width sufficient for sliding in and out trays with refrigerated food items. This can be especially useful in long haul flights that make use of food products refrigerated for long periods of time for freshness and spoilage prevention.

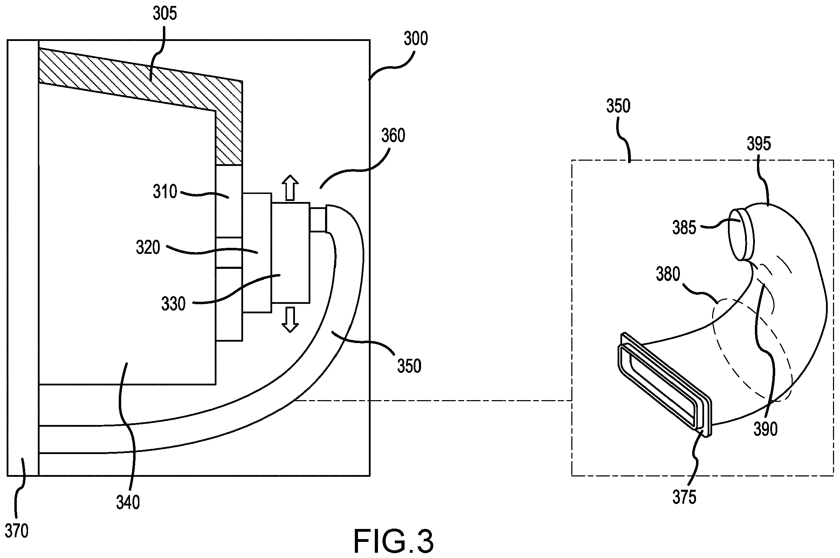

FIG. 3 illustrates a diagram of an assembly of the micro-chiller unit and ingress and egress airflow in an exterior housing in accordance with various embodiments. In FIG. 3 there is shown a housing 300 that can be installed in an in-seat compartment, galley cart, or other aircraft monument. In various embodiments, the housing 300 includes the solid-state components for the cooling operation with the exception of the blower unit 330 that has moving parts. In various embodiments, the components are of a non-corrosive material used in the cooling operation and can withstand vibrations and shaking experienced during aircraft operations. The set of components in FIG. 3 includes the described components of the assembly within the housing 300 of a container (interior housing, chamber, cavity, square bowl) 340 that forms an interior cavity for cooling with an insulative layer 305 configured on each side that prevents thermal seepage of exterior hotter air from the sides of the housing 300, the assembly of aluminum spacers/thermo-electric elements 310 that cool the interior cavity by operation of the Peltier modules configured within the micro-chiller unit 320 or in the case of a reverse polarity of current to the Peltier modules, radiate heat to the interior cavity. The curved or ringed duct (i.e., irregular shaped duct with irregular topology) 350 is configured with a cylindrical irregular topology in which a proximal end is wider to enable a volume of outside air to be drawn in by the micro-chiller unit 320 and cool air distributed from the unit about each side of the container 340 while warmer air is radially 360 rejected by the unit to the outside. The insulative layer 305 prevents the warmer air from mixing with the cooler air. The curved, ringed, and/or irregular shaped duct 350 (i.e., irregular coil shape connector) is formed in a manner to efficiently draw in the air and to prevent any re-ingesting or static motion of the air flow when drawn in by utilizing features in its configured topology that include: an indentation 390 towards its distal end and a (spherical) hump 395 configured before it coupled with an outlet that expunges the air into the micro-chiller unit 320.

In various embodiments, the irregular shaped duct 350 is an atypically shaped duct joined or mated to the vent 370 of the exterior housing 300 at its proximate end with a flange face 375 configured which is wider and flatter in cross-sectional area to draw in the outside air uniformly and then is configured to gradually transform seamlessly to a more oval cross area 380 that is less flatter and circular proceeding towards a flange receptable 385 configured with a circular cross-section to direct the airflow towards the micro-chiller unit 320. In various embodiments, as the duct 350 is transformed towards the flange receptable 385, an indentation 390 is configured in an interior side of the duct to assist in the upward direction for the uniform distribution of airflow towards the center portion of the duct cavity. Also, a slight hump 395 is configured on the exterior side of the duct 350 to direct the direction of the airflow as it is angled towards the flange receptable 385 towards the micro-chiller unit 320 to attempt to maintain the airflow towards the center cavity of the duct 350 during the angling process flow.

In various embodiments, via the vent 370, outside air is drawn into the unit through the irregular shaped duct (i.e., the duct 350), by the blower unit 330 to the micro-chiller unit 320 configured with a radially configured heatsink that expels the hotter air (radially 360). The cooler air is circulated in the container 340 using one or more thermo-couple elements spaced apart by aluminum spacers that provide cooling to the container 340. The insulative layer 305 provides a barrier to heat seepage from outside warmer air and from any warmer air radially repelled by the micro-chiller unit 320.

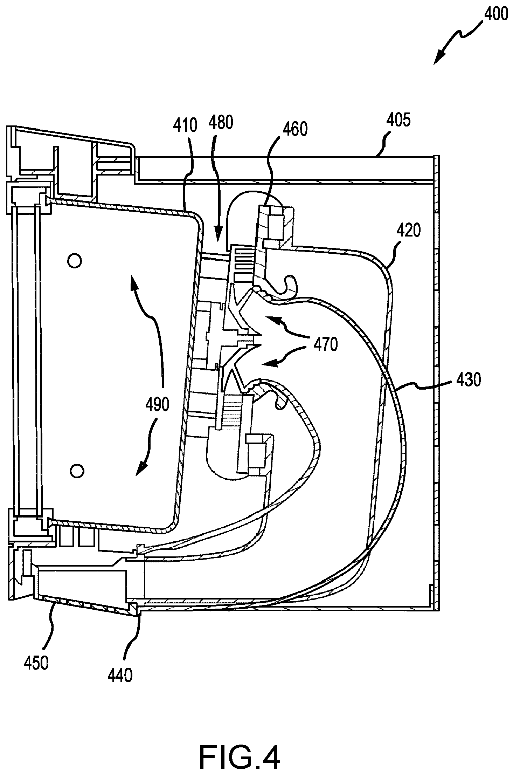

FIG. 4 illustrates a diagram of components of the micro-chiller unit in accordance with various embodiments. In FIG. 4, there is shown a micro-chiller system 400 that is a standalone unit with a tilted container 440 in a housing 405 tilted to prevent the liquid from spilling out of the housing. That is the container 440 is positioned at an angle that any liquid spilled in the interior by virtue of the angle is caused to be retained by the container 440. The angle can be configured as desired to prevent leakage. Additionally, the tilted container 440 can serve as a barrier when cooler air is circulating to lessen the outside air from being drawn int when a side door of the housing 405 is open. For example, the cool air would because of the angle of tilt not flow out of the container 440 by enveloping some of the cooler air within the container 440 (i.e., preventing some cooler air movement outward via an air curtain).

In various embodiments, FIG. 4 shows the irregular shaped duct 430 compared to a rectangular (i.e., perpendicular edged) duct 420. The irregular shaped duct 430 is shown to make up a similar footprint in the interior of the housing 405. Further, the irregular shaped duct 430 is easily swappable in the position of the duct 420 with a similar connection (or fastening) 440 to an exterior vent 450 at a proximate end (or a first portion), and at a distal end 460 (or at a second portion). In various embodiments, the irregular shaped duct 430 channels the outside air into two pathways 470 in the micro-chiller unit 480. Each pathway 470 provides a channel for air distribution across a set of fins of a radially configured heatsink within the micro-chiller unit 480. Hence, the irregular shaped duct 430 routes or separates the air flow by its configuration to distributes the airflow across a cross sectional area exposed to the fins of the radially configured heatsink. This enables two paths 490 of circulation channels of air within the container 440 to uniformly cool the upper and lower parts of the container 440 with cool air of approximately or of a similar temperature gradient in the cooling operation. In various embodiments, the radially configured heatsink ingests air, generates centrally cooled air, and with a curved irregular nonlinear duct configuration enables a higher and more optimized throughput of the cool air to circulate internally in the container of the housing.

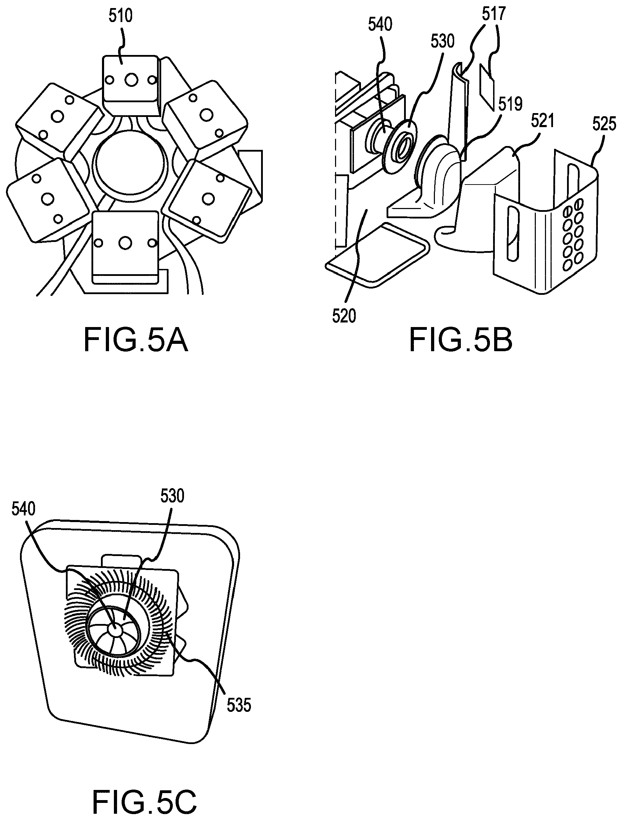

FIGS. 5A, 5B and 5C illustrate diagrams of components of the micro-chiller unit of FIGS 1-4 in accordance with various embodiments. FIG. 5A illustrates a set of aluminum spacers 510 which can be formed with standardized machining. The spacers are generally composed of a metal alloy (e.g., aluminum and alloys thereof) in a block form with high thermal conductivity for transferring changes in temperature to the desired space, container, or chill-pan to be cooled. The spacers 510 are selected of sufficient thickness to ensure consistent thermal connection with a set of thermo-electric elements (or Peltier elements) on which the spacers 510 are mounted and are not of an excessive thickness to produce any thermal inertia. The thermo-electric elements dissipate the extracted heat to the outside of the housing in a forward polarity arrangement, and in a reverse polarity heat the internal cavity. The spacers 510 add a protective layer to stresses and strains that may be experienced by a container wall from the cooling (and heating) effects on which the micro-cooler unit is mounted and are applied by the thermo-electric elements of the unit when current is applied. In various embodiments, the spacers 510 conduct thermal properties such as cooling by the thermo-electric elements at the surface of a wall of the container within the housing.

FIG. 5B illustrates a diagram of a high-level view of the set of components that make up the exterior portion (i.e., non-viewable components) of the assembly of the micro-chiller unit. The components shown of the assembly 520 are mounted on the exterior wall of the internal container and may include the radially configured heatsink 530, the duct, blower 540, support brackets 517, duct 519, cover for duct 521, and an exterior venting plate 525 attached to the rear of the container.

FIG. 5C illustrates a diagram of a radially configured heatsink 530 mounted to the aluminum spacers 510 illustrated in FIG. 5A . The radially configured heatsink 530 is attached on the outside or hot side of the container (i.e., within the housing) with the aluminum spacers 510 and attached to one side of the container (i.e., one of the 5 sides of the interior cavity). The interior side of the container attached to the micro-chiller unit is the cold side separated by a plate that conducts the thermal cooling (conductive thermal cooling) to the interior. Other sides of the container may include an insulative layer to protect against heat seepage.

In various embodiments, the radially configured heatsink 530 includes parallel oriented fins 535 with a blower 540 in the center. The fins 535 are circularly arranged around the blower 540 to reduce local disturbances in cooling flow and to provide parallel air flow through the fins. The duct of the assembly in FIG. 5B is clamped or otherwise coupled to the mounting plate on which the heatsink 530 is also mounted to act as a conduit for the airflow to the heatsink 530. The fins 535 provide heat dissipation for heat transfer (away from the container) from the cooling airflow. The radially configured heatsink 530 can use a low voltage DC power source. In various embodiments, if the micro-chiller unit is configured in an in-seat housing, a power source (typically a DC power source) that is already available or connected to the aircraft seat can power the radially configured heatsink 530, and the other thermo-electric elements used. Because of the absence of refrigerant or supplied liquid coolant, the micro-chiller unit can be mounted with flexibility with any orientation including horizontally or at an angle without concern for liquid (such as refrigerant, water, or oil) circulation or interference from external refrigerator connections or condensation hoses.

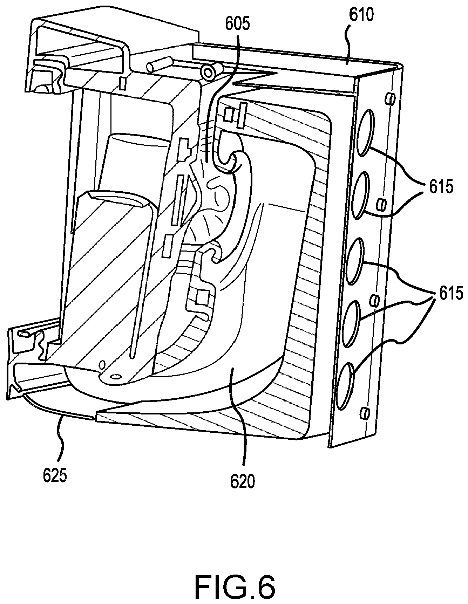

FIG. 6 illustrates a diagram of a micro-chiller unit and the air intake duct assembly, in accordance with various embodiments. In FIG. 6, there is illustrated a housing 610 with a duct 620 that leads to an outside air vent 625 configured in a curved (irregular shaped) manner to draw in the outside air to the micro-chiller device 605. The duct 620 fits within the housing 610 that forms the back assembly of the micro-chiller unit and is attached to the back of the unit. The vents 615 enable hotter air to be dissipated from the unit radially repelled by the heatsink. In embodiments, the dimensions of the unit are about 10.75 inches (27.3 cm) height, 13.25 inches (33.65 cm) width, and 12.5 inches (31.75 cm) in depth. The unit is about 12 lbs. (5.5 kg) with 10% of the weight constituting the micro-chiller device 605. The pull-down time is approximately 31 minutes for 4 degrees Celsius with an appropriate power level to maintain the temperature of approximately 21.8 watts and an outlet air temp less than 30 degrees Celsius.

In various embodiments, the duct 620 is configured to resemble an irregular shape for better fluidic air flow without disturbances and that allows for a more uniform throughput of air flow to the micro-chiller device 605. In various embodiments, the housing 610 is suitable to be mounted on the rear of beverage carts, sub-units in a galley and other monuments that are adjacently placed next to each other. The vents 615 provide air flow to channel air away from the intake vent (outside air vent 625). The exhaust vents (i.e., vents 615) are placed away for the intake vent (i.e., vent 625) so as not to cause intermixing or recirculation of the hotter air expunged. In various embodiments, the hotter air from the vents 615 can be channeled elsewhere in the aircraft galley to not interfere with the intake air received by the unit.

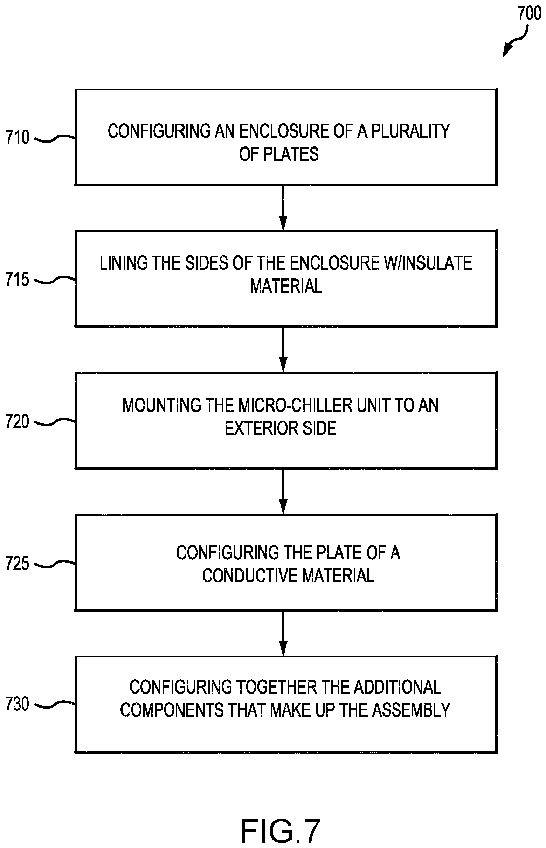

FIG. 7 illustrates a flow diagram for configuring an assembly of the micro-chiller unit in housing the aircraft in accordance with various embodiments. The method 700 for ease of description is described with forming of the duct, the heatsink and thermo-electric element assembly, and container (chamber, interior housing, cavity) within a housing. However, the description is not limited to assembly of the referred to components but can include other components and parts put together to build the micro-chiller unit. In various embodiments, at step 710, a housing is configured of a plurality of plates made up of an aluminum sheet or other lightweight conductive material with comparable properties of a thickness of 1-2 mm to maintain a rigid form within a certain weight criteria. At step 715, all the sides of the housing (with the exception of the door that has a glass or plastic flexible non-opaque insert in combination with an insulative layer), are lined with an insulative layer and an optional cosmetic face sheet. At step 720, the micro-chiller unit is mounted to a plate (usually the rear plate that forms the housing) and cools the plate by thermal conduction which in turn cools the interior cavity. At step 725, the plate can be configured as an aluminum plate (or other conductive material) and may be configured to extend down and fold over additional sides of the housing; also, a cosmetic sheet can be bonded or riveted to the aluminum plate with an optional layer configured of thermal epoxy. The aluminum plate intercepts any heat that is entering the compartment before it has the opportunity to intermingle with the cooler air in the container. At step 730, the additional components of the assembly unit of the blower, thermo-electric elements, aluminum spacers, the radially configured heatsink, the irregular shaped duct and container are assembled with the thermo-electric elements mounted to a set of aluminum block spacers attached to the radially configured heatsink integrated thereon. This assembly makes up the micro-chiller unit and the assembly is mounted to a plate (wall) of the interior container and has one end to an opening of the irregular duct (proximate end) to expel air towards the micro-chiller unit and the other end (distal end) coupled to an exterior vent to draw in outside air and channel it to the radially configured fins of the heatsink. In turn, the thermo-electric elements when a voltage is applied, apply a cooling conductive thermal effect via the aluminum spacers to the plate of the container to which the assembly is attached. The blower dissipates or rejects the hotter air radially from the unit, and the plate of the container is thermally conductively cooled. Air is circulated internally in the container around the exterior of the cavity to cool the interior.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A micro-chiller assembly, comprising:
a housing (300);
an interior compartment with a plurality of sides within the housing;
a micro-chiller unit (320); and
a ringed duct (350) with an irregular topology;
wherein the micro-chiller unit is mounted to a side of the interior compartment;
wherein the ringed duct with the irregular topology is coupled on one end to the micro-chiller unit and coupled on another end to an exterior vent (370) configured in the housing to draw in outside air for channeling to the micro-chiller unit via the ringed duct with irregular topology enabling uniform distribution of airflow.

2. The micro-chiller assembly of claim 1, wherein the micro-chiller unit (320) further comprises:
a radially configured heat sink that receives the outside air and radially repels hotter air from the interior compartment to one or more exterior vents configured with the housing.

3. The micro-chiller assembly of claim 1 or 2, wherein the micro-chiller unit (320) further comprises:
a set of thermo-electric elements (310) is configured to apply conductive cooling to the side of the interior compartment on which the micro-chiller unit is mounted.

4. The micro-chiller assembly of claim 3, wherein the micro-chiller unit (320) further comprises:
a set of blocks on which the set of thermo-electric elements (310) are mounted and are attached to a plate composed of a conductive material that forms the side of the interior compartment wherein the set of thermo-electric elements that is configured apply conductive cooling to the plate that cools the interior compartment.

5. The micro-chiller assembly of claim 4, wherein the interior compartment further comprises an insulative layer (305) formed around one or more sides to thermally insulate the interior compartment from heat seepage through one or more walls of the housing.

6. The micro-chiller assembly of claim 5, wherein the plate is configured to wrap around more than one side of the interior compartment to enable thermal conductive cooling to one or more sides of a plurality of sides of the interior compartment.

7. The micro-chiller assembly of claim 6, the ringed duct (430) further comprising:
a pair of channels (470) that distributes the outside air uniformly across a set of fins that are arranged within a radially configured heatsink to enable uniform conductive cooling of the plate on at least one side of the interior compartment.

8. The micro-chiller assembly of claim 7, wherein the set of blocks provides a protective layer between the plate and the set of thermo-electric elements for stresses caused by conductive cooling of the plate.

9. The micro-chiller assembly of claim 8, wherein the ringed duct is configured to evenly distribute air flow across the heatsink.

10. The micro-chiller assembly of claim 9, further comprising:
a power supply coupled to the micro-chiller unit that is configured to apply a polarity in a forward direction to cool the interior compartment, and to apply the polarity in a reverse direction to heat the interior compartment.

11. The micro-chiller assembly of claim 10, wherein the plate is configured in a range of 1 to 2 millimeters in thickness.

12. An apparatus for managing air flow contained with a housing comprising:
an exterior housing (300);
a micro-chiller unit (320);
an interior compartment; and
a radially configured heatsink;
wherein the micro-chiller unit is attached to a side of the interior compartment within the exterior housing to cause a conductive cooling effect to the side of the interior compartment to cool a space within the interior compartment;
wherein the side of the interior compartment is formed with a conductive material (305) to receive a conductive cooling affect from the micro-chiller unit by transfer of heat via the radially configured heatsink of the micro-chiller unit; and
wherein the radially configured heatsink receives outside air from an irregular shaped duct (350) that channels the outside air to the radially configured heatsink.

13. The apparatus of claim 12, wherein the irregular shaped duct is a ringed duct configured with a topology for fluidic airflow for distribution across a set of fins of the radially configured heatsink; and/or
wherein the side of the interior compartment comprises aluminum; and/or
wherein the side of the interior compartment is covered with a facially cosmetic sheet; and/or
wherein one or more sides of the interior compartment is configured with an insulative barrier to reduce heat seepage into the interior compartment; and/or
wherein the exterior housing is at least one of a cart or a galley compartment of an aircraft.

14. A method to manufacture (700) of a cooling apparatus comprising:
configuring an exterior housing with an interior compartment with a plurality of sides;
configuring a micro-chiller unit of a set of components that comprises at least a heatsink and a set of thermo-electric elements; and
configuring a ringed duct attached to the micro-chiller unit wherein the ringed duct is configured in an irregular shape to enable a uniform distribution of outside air across the heatsink to expel warmer air within the exterior housing, and for conductive cooling of the interior compartment by the set of thermo-electric elements of the micro-chiller unit.

15. The method of claim 14, further comprising:
configuring a set of aluminum blocks for mounting the heatsink and for conductive cooling of the interior compartment; and/or
configuring the exterior housing to fit within a monument of a galley of an aircraft.
